# EUROPÄISCHE PATENTSCHRIFT

(11) **EP 3 007 350 B1**
(45) Veröffentlichungstag und Bekanntmachung des Hinweises auf die Patenterteilung: **12.12.2018**
(21) Anmeldenummer: 15002807.4
(22) Anmeldetag: 01.10.2015
(51) Int. Cl.: H02N 3/00, H02K 44/08, F42B 15/10, F42C 11/00, F02K 9/08, F02K 9/42, F23C 99/00, H02K 44/12, F23M 20/00

(54) **FLUGKÖRPER MIT MAGNETOHYDRODYNAMISCHER (MHD) ERZEUGUNG ELEKTRISCHER ENERGIE**
MISSILE WITH MAGNETOHYDRODYNAMIC (MHD) GENERATION OF ELECTRIC ENERGY
CORPS VOLANT AVEC LA PRODUCTION MAGNÉTOHYDRODYNAMIQUE (MHD) D'ÉNERGIE ÉLECTRIQUE

(30) Priorität: 08.10.2014 DE 102014014907
(43) Veröffentlichungstag der Anmeldung: 13.04.2016
(73) Patentinhaber: MBDA Deutschland GmbH, 86529 Schrobenhausen (DE)
(72) Erfinder: METSKER, Yuriy, 85748 Garching (DE); STURM, Joachim, 85748 Garching (DE)
(74) Vertreter: Isarpatent

(56) Entgegenhaltungen:
- DE-A1- 2 557 775
- DE-A1- 3 922 696
- EA-A1- 201 100 058

## Beschreibung

Die vorliegende Erfindung betrifft einen Flugkörper. Außerdem betrifft die vorliegende Erfindung ein Verfahren zum Betreiben eines Flugkörpers.

Aus dem Stand der Technik sind Flugkörper bekannt. Eine Energieversorgung dieser Flugkörper erfolgt zumeist durch Aktivierung einer integrierten Thermalbatterie. Durch deren Aktivierung startet eine chemische Reaktion, welche über die gesamte Flugdauer des Flugkörpers andauert. Die so gewonnene Energie wird für den Betrieb des Flugkörpers, das heißt für den Betrieb des Suchkopfs, der Stellruder sowie diverser Subsysteme benötigt. Die Entwicklung und Anpassung der Thermalbatterien stellt jedoch einen kostenintensiven und zeitaufwendigen Prozess dar, der insbesondere bei Kleinstflugkörpern unwirtschaftlich ist. Ein Flugkörper gemäß dem Stand der Technik ist beispielsweise aus der DE 10 2008 021 799 A1 bekannt. Ein weiterer Flugkörper ist aus der DE 25 57 775 A1 bekannt.

Es ist daher Aufgabe der Erfindung, einen Flugkörper bereitzustellen, der bei einfacher und kostengünstiger Herstellung eine sichere und zuverlässige Energieversorgung gewährleistet. Ebenso ist es Aufgabe der Erfindung, ein entsprechendes Verfahren anzugeben.

Die Lösung der Aufgabe erfolgt durch einen Flugkörper nach Anspruch 1. Somit erfolgt die Lösung der Aufgabe durch einen Flugkörper, der ein Triebwerk mit einer Düse aufweist. Im Betrieb des Triebwerkes strömt ein Abgasstrom durch die Düse. Insbesondere wird der Abgasstrom in der Düse entspannt, sodass ein Vortrieb des Flugkörpers entsteht. Auf dieser Weise wird der Flugkörper beschleunigt. Erfindungsgemäß sind an der Düse Magnetvorrichtungen angeordnet, die vorteilhafterweise ein Magnetfeld innerhalb der Düse erzeugen. Somit sind geladene Teilchen aus dem Abgasstrom auslenkbar. Dieser Strom von geladenen Teilchen ist als Energieversorgung des Flugkörpers verwendbar. Bei den geladenen Teilchen handelt es sich insbesondere um Ionen, die durch die Verbrennung eines Treibstoffes entstehen.

Weiterhin wird die Aufgabe gelöst durch ein Verfahren zum Betreiben eines Flugkörpers nach Anspruch 8. Zunächst wird eine initiale elektrische Leistung bereitgestellt. Somit ist der Flugkörper mit elektrischer Energie versorgbar, auch wenn das Triebwerk nicht aktiviert ist. Somit ist insbesondere das Triebwerk des Flugkörpers startbar. In einem nächsten Schritt wird daher das Triebwerk des Flugkörpers gestartet, sodass ein Abgasstrom entsteht. In dem Abgasstrom sind unter anderem auch geladene Teilchen, insbesondere Ionen, vorhanden, die für eine Energieversorgung des Flugkörpers genutzt werden können. Daher wird in einem nächsten Schritt des erfindungsgemäßen Verfahrens eine Ablenkung der geladenen Teilchen aus dem Abgasstrom des Triebwerks auf Elektroden durchgeführt. Somit entsteht ein elektrisches Potenzial auf den Elektroden, sodass in einem nächsten Schritt ein Kondensator durch die Elektroden aufgeladen wird. Die in dem Kondensator gespeicherte elektrische Energie wird in einem letzten Schritt zum Versorgen des Flugkörpers verwendet. Somit ist ersichtlich, dass keine zusätzlichen Energieversorgungseinheiten, insbesondere keine Thermalbatterien, benötigt werden, um den Flugkörper sicher und zuverlässig mit elektrischer Energie zu versorgen. Somit wird einerseits die Herstellung, andererseits die Entwicklung des Flugkörpers sehr einfach und kostengünstig. Es ist weiterhin vorgesehen, dass die geladenen Teilchen durch die Magnetvorrichtungen auf Elektroden innerhalb der Düse ablenkbar sind. Auf diese Weise ist eine Potenzialdifferenz auf den Elektroden erzeugbar, sodass eine elektrische Spannung an den Elektroden abgegriffen werden kann.

Die Unteransprüche haben bevorzugte Weiterbildungen der Erfindung zum Inhalt. Besonders vorteilhaft sind die Elektroden an einer Innenwand der Düse angeordnet. Somit erfolgt ein unmittelbares Ablenken der geladenen Teilchen auf die Elektroden. Besonders vorteilhaft ist ebenso vorgesehen, dass die Elektroden und die Magnetvorrichtungen symmetrisch um eine Mittelachse der Düse angeordnet sind. Vorteilhafterweise sind zwei Magnetvorrichtungen und zwei Elektroden gegenüberliegend angeordnet. Auf dieser Weise ist ein Magnetfeld realisiert, das sich zwischen den Magnetvorrichtungen erstreckt. Sollten geladene Teilchen durch dieses Magnetfeld strömen, so werden diese senkrecht zu dem Magnetfeld ausgelenkt. Somit treffen die ausgelenkten geladenen Teilchen auf die Elektroden. Erfindungsgemäß sind die Elektroden mit einer Energiespeichervorrichtung verbunden. Die Energiespeichervorrichtung ist insbesondere ein Kondensator. Auf diese Weise ist die Energie, die an den Elektroden abgreifbar ist, in dem Kondensator speicherbar. So ist erfindungsgemäß vorgesehen, dass während das Triebwerk in Betrieb ist, eine über dem Bedarf des Flugkörpers liegende elektrische Leistung erzeugbar ist. Somit wird überschüssige elektrische Energie erzeugt, die zum Versorgen des Flugkörpers nicht benötigt wird. Diese überschüssige elektrische Energie ist daher erfindungsgemäß in der Energiespeichervorrichtung speicherbar. Somit ist ein Flug des Flugkörpers realisierbar, bei dem das Triebwerk nicht über die gesamte Flugdauer aktiviert ist. Nach der erfindungsgemäßen Deaktivierung des Triebwerks während des Fluges steht dem Flugkörper weiterhin elektrische Energie aus der Energiespeichervorrichtung zur Verfügung. Somit ist eine Energieversorgung bis zum Ende des Fluges des Flugkörpers gewährleistet.

Der Abgasstrom ist vorteilhafterweise durch Verbrennung eines Feststofftreibsatzes erzeugbar. Alternativ ist der Abgasstrom durch Verbrennung von flüssigen oder gelförmigen Treibstoffen erzeugbar. Ebenso sind bevorzugt Kombinationen aus den genannten Treibstoffarten vorgesehen, insbesondere hybride Treibstoffe. Die Verwendung eines Feststofftreibsatzes erlaubt ein sicheres und kostengünstiges Herstellverfahren des Flugkörpers.

Vorteilhafterweise ist außerdem der Abgasstrom derart ausgestaltet, dass dieser einen lonisierungsgrad von 10⁻⁵ Ionen/mol aufweist. Der lonisierungsgrad des Abgasstroms ist insbesondere durch einen Zusatz von Substanzen einstellbar, die eine geringe Ionisierungsenergie aufweisen. Somit lässt sich der lonisierungsgrad an die Verbrennungstemperatur des Treibstoffes anpassen. Auf dieser Weise ist sichergestellt, dass eine ausreichend hohe Anzahl von Ionen in dem Abgasstrom vorhanden sind, sodass ausreichend elektrische Energie an den Elektroden abgreifbar ist.

Die Magnetvorrichtungen sind insbesondere Permanentmagnete. Diese sind sehr einfach und kostengünstig verwendbar und erlauben eine sichere und zuverlässige Erzeugung eines Permanentmagnetfeldes.

Die Erfindung wird nun anhand von Ausführungsbeispielen unter Berücksichtigung der beigefügten Zeichnungen detailliert beschrieben. In den Zeichnungen ist:
- Figur 1: eine schematische Schnittansicht eines Teilbereichs eines Flugkörpers gemäß einem Ausführungsbeispiel der Erfindung,
- Figur 2: eine schematische Ansicht eines Teilbereichs des Flugkörpers gemäß dem Ausführungsbeispiel der Erfindung, und
- Figur 3: eine schematische Darstellung des Verfahrens zum Betreiben des Flugkörpers gemäß dem Ausführungsbeispiel der Erfindung.

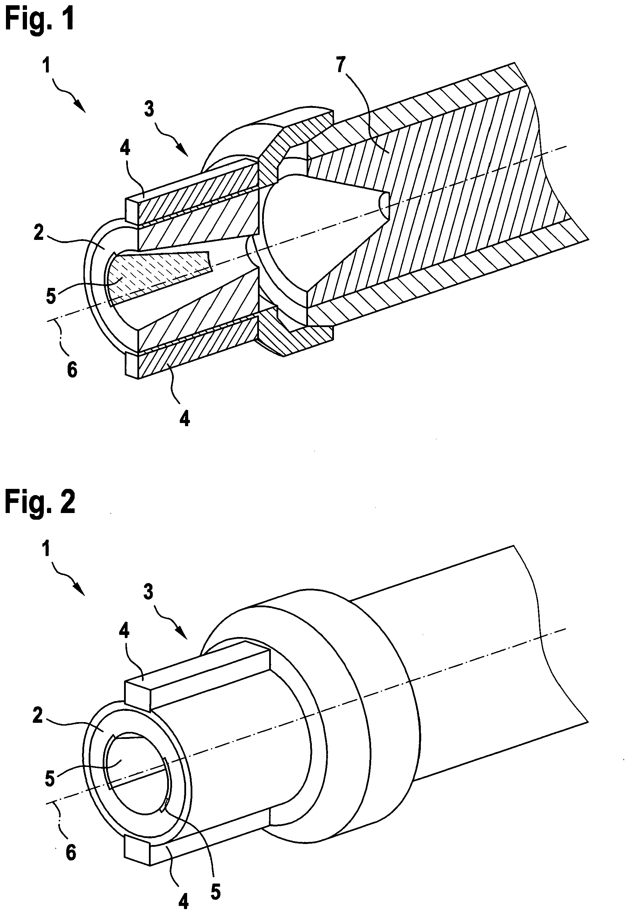

Figur 1 zeigt eine schematische Schnittansicht eines Teilbereichs eines Flugkörpers 1 gemäß einem Ausführungsbeispiel der Erfindung. Figur 2 zeigt einen Teilbereich des Flugkörpers aus Figur 1 in einer weiteren Ansicht.

Der Flugkörper 1 umfasst ein Triebwerk 3, das eine Düse 2 aufweist. Das Triebwerk 3 wird durch Verbrennung eines Feststofftreibsatzes 7 aktiviert. Wird der Feststofftreibsatz 7 verbrannt, so entsteht ein Abgasstrom, der aus der Düse 2 austritt. Auf diese Weise ist en Vortrieb des Flugkörpers 1 erzeugbar.

Gleichzeitig ist der Feststofftreibsatz 7 derart ausgestaltet, dass dessen Abgase einen hohen Ionisierungsgrad aufweisen. Somit sind in dem Abgasstrom geladene Teilchen, insbesondere Ionen, vorhanden. Derartige Ionen können zur Energieversorgung des Flugkörpers 1 verwendet werden.

Die Verbrennungsgase des Feststofftreibsatzes 7 sind durch Zusatz von Substanzen mit entsprechender Ionisierungsenergie hinsichtlich dem Ionisierungsgrad einstellbar. Somit weist der Feststofftreibsatz 7 eine vordefinierte Menge an zusätzlichen Substanzen auf, sodass ein Abgasstrom mit ausreichendem lonisierungsgrad entsteht.

An der Düse 2 sind Magnetvorrichtungen 4, insbesondere Permanentmagnete angebracht, die ein Magnetfeld innerhalb der Düse 2 erzeugen. Somit müssen die geladenen Teilchen, insbesondere Ionen, des Abgasstroms das Magnetfeld der Magnetvorrichtungen 4 durchqueren. Ein Durchqueren eines Magnetfeldes von geladenen Teilchen generiert eine Lorenzkraft, sodass die geladenen Teilchen senkrecht zu dem Magnetfeld abgelenkt werden. Daher ist vorgesehen, dass an der Düse jeweils zwei gegenüberliegende Magnetvorrichtungen 4 und Elektroden 5 symmetrisch angeordnet sind. Auf diese Weise werden die abgelenkten geladenen Teilchen aus dem Abgasstrom auf Elektroden 5 geleitet. Durch die Ladung der geladenen Teilchen entsteht eine Potenzialdifferenz an den Elektroden 5, sodass eine elektrische Spannung abgreifbar ist.

Die Magnetvorrichtungen 4 sind insbesondere in der Art ausgestaltet, dass diese ein Magnetfeld erzeugen, das innerhalb einer ersten virtuellen Ebene liegt. Innerhalb der ersten virtuellen Ebene ist außerdem die Mittelachse 6 der Düse 2 angeordnet. Um ein sicheres und zuverlässiges Ablenken der geladenen Teilchen auf die Elektroden 5 zu gewährleisten, müssen die Elektroden 5 zumindest innerhalb einer zweiten virtuellen Ebene angeordnet werden, die senkrecht auf der ersten virtuellen Ebene steht. Da die Elektroden 5 auf einer Innenseite der Düse 2 angeordnet sind, wobei die Düse 2 einen kegelförmigen Innenquerschnitt aufweist, haben die Elektroden 5 insbesondere die Form von Segmenten einer Mantelfläche eines Kegelstumpfes. Somit ist sichergestellt, dass eine Vielzahl der durch die Düse 2 strömenden geladenen Teilchen, die von der Magnetvorrichtung 4 abgelenkt werden, auf die Elektroden 5 treffen.

Die Elektroden 5 sind mit einer nicht gezeigten Energiespeichervorrichtung verbunden. Die Energiespeichervorrichtung ist insbesondere ein Kondensator. Somit ist der Kondensator während des Betriebes des Flugkörpers 1, das heißt während des Betriebes des Triebwerkes 3, aufladbar. Die so gespeicherte elektrische Energie steht schließlich als Energieversorgung für den Flugkörper 1 zur Verfügung.

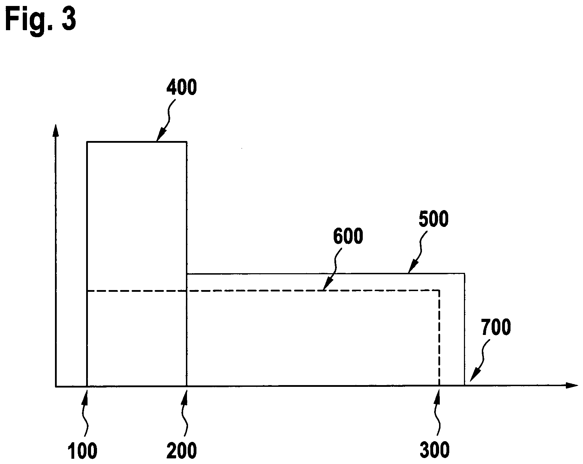

Figur 3 zeigt schematisch den Ablauf des erfindungsgemäßen Verfahrens zum Betreiben eines Flugkörpers 1. In dem in Figur 3 gezeigten kartesischen Koordinatensystem bezeichnet die Abszissenachse die Zeit, während die Ordinatenachse die durch die Ablenkung von elektrisch geladenen Teilchen erzeugbare elektrische Leistung anzeigt.

Zunächst wird dem Flugkörper 1 eine initiale elektrische Leistung bereitgestellt, sodass zu einem ersten Zeitpunkt 100 das Triebwerk 3 des Flugkörpers 1 startbar ist. Mit dem Starten des Triebwerks 3 beginnt gleichzeitig die Wandlung von elektrischer Energie, sodass an den Elektroden 5 eine elektrische Leistung abgreifbar ist. Während des Betriebes des Triebwerkes 3 entspricht dies einer konstanten maximalen elektrischen Leistung 400. Gleichzeitig ist die maximale elektrische Leistung 400 größer als die von dem Flugkörper 1 benötigte elektrische Leistung 600. Somit wird die überschüssige elektrische Leistung in einer Energiespeichervorrichtung, insbesondere in einem Kondensator, gespeichert. Zu einem zweiten Zeitpunkt 200 wird das Triebwerk 3 abgeschaltet. Insbesondere ist zu dem zweiten Zeitpunkt 200 der Treibstoff des Flugkörpers 1 verbraucht. Somit erfolgt keine Bereitstellung von elektrischer Leistung an den Elektroden 5. Um eine Energieversorgung des Flugkörpers 1 weiterhin gewährleisten zu können, wird daher Energie aus der Energiespeichervorrichtung entnommen. Somit wird die Energiespeichervorrichtung entladen, indem diese die elektrische Speicherleistung 500 an den Flugkörper 1 abgibt. Wie aus Figur 3 ersichtlich ist, ist auch die elektrische Speicherleistung 500 größer als die benötigte elektrische Leistung 600. Somit ist eine Energieversorgung des Flugkörpers 1 weiterhin gewährleistet.

Zu einem dritten Zeitpunkt 300 ist der Flug des Flugkörpers 1 beendet. Insbesondere ist der Flug des Flugkörpers 1 durch Einwirken auf ein Ziel beendet. Wie aus Figur 3 jedoch ersichtlich ist, wäre die Energiespeichervorrichtung erst zu einem vierten Zeitpunkt 700 erschöpft, der jedoch nach dem dritten Zeitpunkt 300 liegt. Somit steht stets ausreichend elektrische Leistung für den Flugkörper 1 zur Verfügung, sodass dieser während seines gesamten Flugs mit elektrischer Leistung versorgbar ist.

Auf diese Weise ist ein Flugkörper 1 realisiert, der keine zusätzliche elektrische Energieversorgung benötigt. Es muss daher keine teure und zeitaufwendige Entwicklung von Thermalbatterien erfolgen. Somit ist der Flugkörper 1 sehr einfach und kostengünstig herstellbar. Damit eignet sich der Flugkörper 1 insbesondere als kleinkalibriger Flugkörper.

### Bezugszeichenliste

- 1: Flugkörper
- 2: Düse
- 3: Triebwerk
- 4: Magnetvorrichtungen
- 5: Elektroden
- 6: Mittelachse
- 7: Feststofftreibsatz

- 100: erster Zeitpunkt
- 200: zweiter Zeitpunkt
- 300: dritter Zeitpunkt
- 400: maximale elektrische Leistung
- 500: elektrische Speicherleistung
- 600: benötigte elektrische Leistung
- 700: vierter Zeitpunkt

## Patentansprüche

1. Flugkörper (1) umfassend ein Triebwerk (3) mit einer Düse (2), wobei im Betrieb des Triebwerkes (3) ein Abgasstrom durch die Düse (2) strömt und wobei Magnetvorrichtungen (4) an der Düse angeordnet sind, die ein Magnetfeld in der Düse (2) erzeugen und mit denen geladene Teilchen aus dem Abgasstrom auf Elektroden (5) innerhalb der Düse auslenkbar sind, so dass eine elektrische Spannung an den Elektroden (5) abgreifbar ist,
**dadurch gekennzeichnet, dass**
die Elektroden (5) mit einer Energiespeichervorrichtung elektrisch verbunden sind und der Flugkörper (1) so eingerichtet ist, dass zwischen einem ersten Zeitpunkt (100), zu dem das Triebwerk (3) gestartet wird, und einem zweiten Zeitpunkt (200), zu dem das Triebwerk (3) abgeschaltet wird, eine konstante maximale elektrische Leistung (400), welche größer als eine vom Flugkörper (1) benötigte elektrische Leistung (600) ist, erzeugt wird und überschüssige elektrische Leistung in der Energiespeichervorrichtung als elektrische Speicherleistung gespeichert wird, und zwischen dem zweiten Zeitpunkt (200) und einem dritten Zeitpunkt (300), zu dem der Flug des Flugkörpers (1) beendet ist, elektrische Speicherleistung (500) an den Flugkörper (1) abgegeben wird, welche größer als die benötigte elektrische Leistung (600) ist, wobei die Energiespeichervorrichtung so ausgelegt ist, dass diese bis zu einem vierten Zeitpunkt (700), welcher nach dem dritten Zeitpunkt (300) liegt, die elektrische Speicherleistung (500) abgeben kann.

2. Flugkörper (1) nach Anspruch 1, **dadurch gekennzeichnet, dass** die Elektroden (5) an einer Innenwand der Düse (2) angeordnet sind.

3. Flugkörper (1) nach einem der vorhergehenden Ansprüche, **dadurch gekennzeichnet, dass** die Elektroden (5) und die Magnetvorrichtungen (4) symmetrisch um eine Mittelachse (6) der Düse (2) angeordnet sind.

4. Flugkörper (1) nach einem der vorhergehenden Ansprüche, **dadurch gekennzeichnet, dass** zwei Magnetvorrichtungen (4) und zwei Elektroden (5) gegenüberliegend angeordnet sind.

5. Flugkörper (1) nach einem der vorhergehenden Ansprüche, **dadurch gekennzeichnet, dass** die Energiespeichervorrichtung ein Kondensator ist.

6. Flugkörper (1) nach einem der vorhergehenden Ansprüche, **dadurch gekennzeichnet, dass** der Abgasstrom durch Verbrennung eines Feststofftreibsatzes (7) erzeugbar ist.

7. Flugkörper (1) nach einem der vorhergehenden Ansprüche, **dadurch gekennzeichnet, dass** die Magnetvorrichtungen (4) Permanentmagnete sind.

8. Verfahren zum Betreiben eines Flugkörpers (1), umfassend die Schritte:
- Bereitstellen einer initialen elektrischen Leistung,
- Starten eines Triebwerkes (3) des Flugkörpers (1),
- Ablenken von geladenen Teilchen aus dem Abgasstrom des Triebwerks (3) auf Elektroden (5) durch an der Düse (2) angeordnete Magnetvorrichtungen (4), die ein Magnetfeld in der Düse (2) erzeugen,
- Verwenden der Elektroden (5) zum Versorgen des Flugkörpers (1) mit elektrischer Energie und zum Speichern von Energie in einer Energiespeichervorrichtung,
- Abschalten des Triebwerks (3);
- Verwenden der Energiespeichereinrichtung zum Versorgen des Flugkörpers (1) mit elektrischer Energie bis zu einem Zeitpunkt (300) bei dem der Flug des Flugkörpers (3) beendet ist, wobei in der Energiespeichereinrichtung zwischen dem Starten des Triebwerks und dem Abschalten des Triebwerks eine elektrische Speicherleistung gespeichert wird, welche an den Flugkörper (3) bis zu einem vierten Zeitpunkt (700) abgebbar ist, welcher nach dem dritten Zeitpunkt (300) liegt.

## Claims

1. Missile (1) comprising a power unit (3) having a nozzle (2), wherein when the power unit (3) is being operated an exhaust gas flow flows through the nozzle (2) and wherein magnetic devices (4) are arranged on the nozzle, said magnetic devices generating a magnetic field in the nozzle (2) and using said magnetic devices charged particles may be deflected from the exhaust gas flow onto electrodes (5) within the nozzle, with the result that an electrical voltage may be tapped at the electrodes (5),
**characterised in that**
the electrodes (5) are electrically connected to an energy storage device and the missile (1) is configured in such a manner that a constant maximum electrical power (400) that is greater than an electrical power (600) that is required by the missile (1) is generated between a first point in time (100) at which the power unit (3) is started, and a second point in time (200) at which the power unit (3) is switched off, and excess electrical power is stored in the energy storage device as electrically stored power, and electrically stored power (500) that is greater than the required electrical power (600) is output to the missile (1) between the second point in time (200) and a third point in time (300) at which the flight of the missile (1) is terminated, wherein the energy storage device is configured in such a manner that this may output the electrically stored power (500) until a fourth point in time (700) that is after the third point in time (300).

2. Missile (1) according to claim 1, **characterised in that** the electrodes (5) are arranged on an inner wall of the nozzle (2) .

3. Missile (1) according to any one of the preceding claims, **characterised in that** the electrodes (5) and the magnetic devices (4) are arranged symmetrically about a central axis (6) of the nozzle (2).

4. Missile (1) according to any one of the preceding claims, **characterised in that** two magnetic devices (4) and two electrodes (5) are arranged lying opposite one another.

5. Missile (1) according to any one of the preceding claims, **characterised in that** the energy storage device is a capacitor.

6. Missile (1) according to any one of the preceding claims, **characterised in that** the exhaust gas flow may be generated by means of burning a solid fuel propellant (7).

7. Missile (1) according to any one of the preceding claims, **characterised in that** the magnetic devices (4) are permanent magnets.

8. Method for operating a missile (1), comprising the following steps:
- providing an initial electrical power,
- starting a power unit (3) of the missile (1),
- deflecting charged particles from the exhaust gas flow of the power unit (3) onto electrodes (5) by means of magnetic devices (4) that are arranged on the nozzle (2), said magnetic devices generating a magnetic field in the nozzle (2),
- using the electrodes (5) so as to supply the missile (1) with electrical energy and so as to store energy in an energy storage device,
- switching the power unit (3) off;
- using the energy storage device so as to supply the missile (1) with electrical energy until a point in time (300) at which the flight of the missile (3) is terminated, wherein an electrically stored power is stored in the energy storage device between starting the power unit and switching the power unit off and said electrically stored power may be output to the missile (3) until a fourth point in time (700) that is after the third point in time (300).

## Revendications

1. Missile (1) comprenant un groupe motopropulseur (3) muni d'une buse (2), un flux de gaz d'échappement circulant à travers la buse (2) en fonctionnement du groupe motopropulseur (3), et des dispositifs magnétiques (4) étant disposés sur la buse, lesquels génèrent un champ magnétique dans la buse (2) et avec lesquels des particules chargées provenant du flux de gaz d'échappement peuvent être déviées sur des électrodes (5) placées à l'intérieur de la buse, de sorte qu'une tension électrique peut être prélevée sur les électrodes (5),
**caractérisé en ce que**
les électrodes (5) sont électriquement reliées à un dispositif accumulateur d'énergie et **en ce que** le missile (1) est configuré de manière à ce qu'entre un premier moment (100) auquel le groupe motopropulseur (3) est démarré et un deuxième moment (200) auquel le groupe motopropulseur est arrêté, une puissance électrique (400) maximale constante, laquelle est supérieure à une puissance électrique (600) requise par le missile, soit générée et que la puissance électrique excessive soit stockée dans le dispositif accumulateur d'énergie en tant que puissance de stockage électrique, et qu'entre le deuxième moment (200) et un troisième moment (300) auquel le vol du missile (1) est terminé, la puissance de stockage (500) électrique soit délivrée au missile (1), laquelle est supérieure à la puissance électrique (600) requise, le dispositif accumulateur d'énergie étant conçu de manière à ce que celui-ci, jusqu'à un quatrième moment (70) qui est situé après le troisième moment (300), puisse délivrer la puissance de stockage (500) électrique.

2. Missile (1) selon la revendication 1, **caractérisé en ce que** les électrodes (5) sont disposées sur une paroi intérieure de la buse (2).

3. Missile (1) selon l'une quelconque des revendications précédentes, **caractérisé en ce que** les électrodes (5) et les dispositifs magnétiques (4) sont disposés symétriquement autour d'un axe médian (6) de la buse (2).

4. Missile (1) selon l'une quelconque des revendications précédentes, **caractérisé en ce que** deux dispositifs magnétiques (4) et deux électrodes (5) sont disposés de manière opposée.

5. Missile (1) selon l'une quelconque des revendications précédentes, **caractérisé en ce que** le dispositif accumulateur d'énergie est un condensateur.

6. Missile (1) selon l'une quelconque des revendications précédentes, **caractérisé en ce que** le flux de gaz d'échappement peut être généré par combustion d'un propergol solide (7).

7. Missile (1) selon l'une quelconque des revendications précédentes, **caractérisé en ce que** les dispositifs magnétiques (4) sont des aimants permanents.

8. Procédé de fonctionnement d'un missile (1), comprenant les étapes :
- fourniture d'une puissance électrique initiale,
- démarrage d'un groupe motopropulseur (3) du missile (1),
- déviation sur des électrodes (5) de particules chargées provenant du flux de gaz d'échappement du groupe motopropulseur (3) au moyen de dispositifs magnétiques (4) disposés sur la buse (2), lesquels génèrent un champ magnétique dans la buse (2),
- utilisation des électrodes (5) pour alimenter le missile (1) en énergie électrique et pour stocker l'énergie dans un dispositif accumulateur d'énergie,
- arrêt du groupe motopropulseur (3);
- utilisation du dispositif accumulateur d'énergie pour alimenter le missile (1) en énergie électrique jusqu'à un moment (300) auquel le vol du missile (3) est terminé, une puissance de stockage électrique étant stockée dans le dispositif accumulateur d'énergie entre le démarrage et l'arrêt du groupe motopropulseur, laquelle peut être délivrée au missile (3) jusqu'à un quatrième moment (700) qui est situé après le troisième moment (300).
